# EUROPEAN PATENT APPLICATION

(11) **EP 3 855 702 A1**
(43) Date of publication of application: **28.07.2021**
(21) Application number: 18935910.2
(22) Date of filing: 30.10.2018
(51) Int. Cl.: H04L 29/08

(54) **BLOCKCHAIN-BASED SERVICE PROCESSING METHOD AND SYSTEM**

(30) Priority: 26.09.2018 CN 201811126528
(71) Applicant: Wangsu Science & Technology Co., Ltd., Shanghai 201800 (CN)
(72) Inventor: LIN, Hongqi, Shanghai 201800 (CN)
(74) Representative: De Arpe Tejero, Manuel
(86) International application number: PCT/CN2018/112680
(87) International publication number: WO 2020/062394

(57) **Abstract**

The present invention discloses a blockchain-based business processing method and system. The method includes: receiving, by a business node, a business request sent by a client, wherein the business request includes an acceptance condition; determining whether business attribute information of the business node includes a content matching the acceptance condition; if the business attribute information of the business node includes the content matching the acceptance condition, processing the business request, and generating business data; sending a pre-processing block including the business data from the business node to a consensus node; at the consensus node, performing a consensus verification process on the pre-processing block; and if the pre-processing block successfully passes the consensus verification process, storing the pre-processing block in a blockchain by the business node. The present invention may designate certain business nodes to process a business request through specifying an acceptance condition in the business request. Following requestor's expectation, the business to be processed in the blockchain may be processed by only the business nodes satisfying the acceptance condition. It may be avoided that the business node in the blockchain processes the business request without being constrained by the requestor.

## Description

### FIELD OF THE DISCLOSURE

The present invention relates to the field of blockchain technologies and, more particularly, relates to a blockchain-based business processing method and system.

### BACKGROUND

As an emerging technology, blockchain technology has become a widely focused technology because its advantages of openness, inalterability, and decentralization, etc.

In the existing blockchain-based business processing, a business request generated by a client may be broadcast in entire blockchain network through P2P technology. Each blockchain node in the blockchain network may receive and process the business request and may generate business data. Each blockchain node may broadcast the self-generated business data to other blockchain nodes. Then, all blockchain nodes may compete for a ledger right through a consensus mechanism. The blockchain node that wins the ledger right may store the self-generated business data in the blockchain.

Obviously, in the existing blockchain-based business processing, before the blockchain nodes compete for the ledger right, each blockchain node in the blockchain network may process the business request. There is no limitation on processing the business request by any blockchain node. Under certain circumstances, for example, for a transaction task, a user may want to let certain blockchain nodes satisfying certain conditions complete the task. The existing blockchain-based business processing method is unable to provide choices for business scenarios that require designating certain business nodes to extend the blockchain.

### BRIEF SUMMARY OF THE DISCLOSURE

To solve the problem of the existing technology, the embodiments of the present invention provides a blockchain-based business processing method and system. The technical solution includes the following.

One aspect of the present invention provides a blockchain-based business processing method. The method includes: receiving, by a business node, a business request sent by a client, where the business request includes an acceptance condition; determining whether business attribute information of the business node includes a content matching the acceptance condition; if the business attribute information of the business node includes the content matching the acceptance condition, processing the business request, and generating business data; sending a pre-processing block including the business data from the business node to a consensus node; at the consensus node, performing a consensus verification process on the pre-processing block; and if the pre-processing block successfully passes the consensus verification process, storing, by the business node, the pre-processing block in a blockchain.

Optionally, before the business node receives the business request sent by the client, the method further includes: sending, by the business node, a node identifier and the business attribute information of the business node to the consensus node; after the consensus node receives the node identifier and the business attribute information, verifying the business attribute information; if the business attribute information is verified, sending, by the consensus node, verification success information to the business node; and after the business node receives the verification success information, storing the node identifier and the business attribute information of the business node in the blockchain.

Optionally, verifying the authenticity of the business attribute information includes one of: obtaining the business attribute information of the business node through a verification interface provided by the business node and comparing and verifying the obtained business attribute information with the to-be-verified business attribute information; or verifying the business attribute information through a zero-knowledge proof mechanism; or verifying the business attribute information through a third-party authentication certificate.

Optionally, the pre-processing block also includes the business request and after the business node sends the pre-processing block to the consensus node, the method includes: after the consensus node receives the pre-processing block, obtaining the business attribute information of the business node based on the pre-processing block; and when the consensus node determines that the business attribute information of the business node includes the content matching the acceptance condition, performing the consensus verification process on the pre-processing block.

Optionally, after the consensus node performs the consensus verification process on the pre-processing block, the method includes: if the pre-processing block successfully passes the consensus verification process, storing corresponding confirmed information in the blockchain by the consensus node.

Optionally, if the pre-processing block successfully passes the consensus verification process, storing the pre-processing block in the blockchain by the business node includes: if the business node obtains the confirmed information corresponding to the pre-processing block, storing the pre-processing block in the blockchain.

Optionally, the business attribute information includes one or more of a geographical location of the business node, a network operator to which the business node belongs, a processing capability of the business node, and business processing qualification which the business node possesses.

Optionally, the method further includes: storing, by the consensus node, verification mechanisms for various types of the business attribute information.

Another aspect of the present invention provides a blockchain-based business processing system. The system includes: a business node configured to receive a business request sent by a client and including an acceptance condition, determine whether business attribute information of the business node includes a content matching the acceptance condition, process the business request and generating business data if the business attribute information includes the content matching the acceptance condition, send a pre-processing block including the business data to a consensus node, and store the pre-processing block in a blockchain when the pre-processing block successfully passes a consensus verification process; and the consensus node configured to perform the consensus verification process on the pre-processing block.

Optionally, the business node sends a node identifier of the business node and the business attribute information to the consensus node; after the consensus node receives the node identifier and the business attribute information, the consensus node verifies authenticity of the business attribute information and sends verification success information to the business node if the business attribute information is verified; and after the business node receives the verification success information, the business node stores the node identifier and the business attribute information of the business node in the blockchain.

Optionally, the consensus node verifies the authenticity of the business attribute information by one of: obtaining the business attribute information of the business node through a verification interface provided by the business node and comparing and verifying the obtained business attribute information with the to-be-verified business attribute information; verifying the authenticity of the business attribute information through a zero-knowledge proof mechanism; and verifying the authenticity of the business attribute information through a third-party authentication certificate.

Optionally, after the consensus node receives the pre-processing block, the consensus node obtains the business attribute information of the business node based on the pre-processing block; and when the consensus node determines that the business attribute information of the business node includes the content matching the acceptance condition, the consensus node performs the consensus verification process on the pre-processing block.

Optionally, if the pre-processing block successfully passes the consensus verification process, the consensus node stores corresponding confirmed information in the blockchain.

Optionally, if the business node obtains the confirmed information corresponding to the pre-processing block, the business node stores the pre-processing block in the blockchain.

Optionally, the business attribute information includes one or more of a geographical location of the business node, a network operator to which the business node belongs, a processing capability of the business node, and business processing qualification which the business node possesses.

Optionally, the business node stores in advance verification mechanisms for various types of the business attribute information.

The embodiments of the present invention may designate certain business nodes to process a business request through specifying an acceptance condition in the business request. Following requestor's expectation, the business to be processed in the blockchain may be processed by only the business nodes satisfying the acceptance condition. It may be avoided that the business node in the blockchain processes the business request without being constrained by the requestor or the business node unsatisfying the acceptance condition processes the business request. Only the business nodes satisfying the acceptance condition in the blockchain may be permitted to process the business request and to compete for the ledger right by sending the pre-processing block to the consensus node. Thus, the overall business processing load and data transmission load in the blockchain may be reduced.

### BRIEF DESCRIPTION OF THE DRAWINGS

In order to more clearly illustrate the technical solutions in the embodiments of the present invention, drawings used in the description of the embodiments will be briefly described below. Obviously, the drawings in the following description are only some embodiments of the present invention. Other drawings may also be obtained by those of ordinary skill in the art without inventive work.
FIG. 1 illustrates a schematic diagram of an exemplary network framework according to disclosed embodiments; and
FIG. 2 illustrates a flow chart of an exemplary blockchain-based business processing method according to disclosed embodiments.

### DETAILED DESCRIPTION

To make the objectives, technical solutions, and advantages of the present invention clearer, the following further describes the embodiments of the present invention in details with reference to the accompanying drawings.

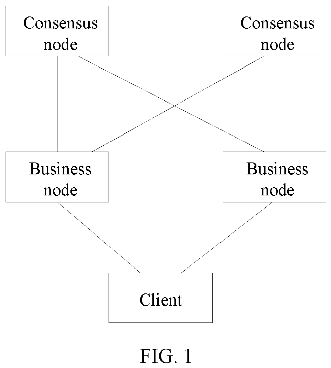

The present invention provides a blockchain-based business processing method. The method may be applied to a network framework as shown in FIG. 1. The network framework may include clients, business nodes, and consensus nodes. The business nodes and the consensus nodes are included in a blockchain. FIG. 1 is intended to be illustrative. The number of the business nodes and the number of the consensus nodes may not be limited. The business node according to embodiments of the present invention may serve as the business node only or may also serve as both the business node and the consensus node at the same time. Similarly, the consensus node according to embodiments of the present invention may serve as the consensus node only or may also serve as both the business node and the consensus node at the same time. The business node may be connected to any apparatus that serves the consensus node. The business node and the consensus node may a server. The server may be an independent apparatus or may be a system comprising a plurality of apparatuses, for example, a distributed server.

For illustrative purposes, the blockchain-based business processing method may be described with one business node. The business node may receive a business request sent by a client. When the business node satisfies an acceptance condition for the business request, the business node may perform a business processing to generate business data. The business node may send the business data to a consensus node. The consensus node may perform a consensus verification process on the business data. If the business data successfully passes the consensus verification process, the business data may be stored in the blockchain.

The blockchain-based business processing method is described in detail as follows.

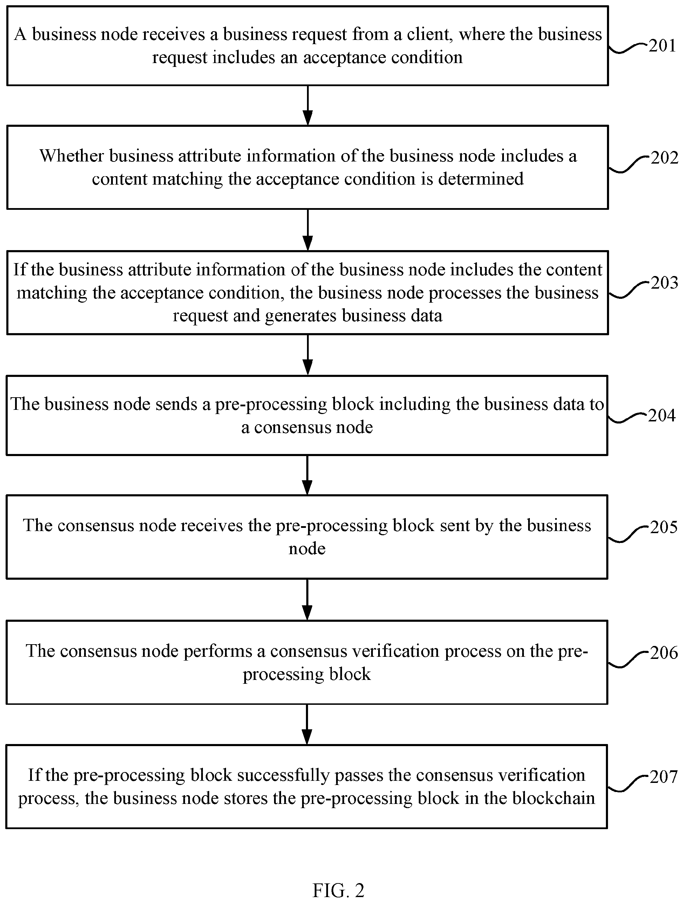

Referring to FIG. 2, the present invention provides a flow chart of an exemplary blockchain-based business processing method. Specifically, the method may include the following steps.

At step 201, a business node receives a business request from a client, where the business request includes an acceptance condition.

The business request may include a business content and the acceptance condition. The business content of the business request may be data to be processed and used to generate the business data to be saved. For example, when the business request corresponds to a remittance transaction, the business content may include user information of transaction parties and an amount of the remittance transaction.

The acceptance condition of the business request may be used to designate business nodes satisfying the acceptance condition to perform the business processing. For example, the acceptance condition may include a location condition of the business nodes, a capability condition of the business processing, and a qualification condition of the business processing, etc.

When the business request sent from the client is received, whether the business request is for a designated processing business is determined first. That is, whether the business request includes the acceptance condition or whether the business request includes an identifier for the designated processing business. If the business request is not for a designated processing business, the business request may be processed according to a conventional business processing approach. If the business request is for a designated processing business, the following step may be performed.

At step 202, whether business attribute information of the business node includes a content matching the acceptance condition is determined.

All the business nodes in the blockchain network could receive the business request sent by the client. However, the business nodes need to determine first whether the business node itself satisfies the acceptance condition of the business request. Only the business nodes that satisfy the acceptance condition may perform the business processing.

The business attribute information of the business node may be any related information required by the business processing, that is, the information related to the acceptance condition. For example, the information may include a geographical location of the business node, a network operator to which the business node belongs, a processing capability of the business node, and business processing qualification (e.g., a signature certificate) which the business node possesses. The business attribute information may be preset in the business node or may be preset in another apparatus. Upon initialization of the business node, the business node may obtain the business attribute information from the apparatus.

The business node may determine whether the business node itself satisfies the acceptance condition, according to a result of determining whether the business attribute information of the business node includes the content related to the acceptance condition. For example, the acceptance condition of the business request may be designating business nodes in region A for performing the business processing. After the business node receives the business request, the business node may determine whether the geographical location of the business node included in the business attribute information is in region A. If the it is in region A, it indicates that the business node satisfies the acceptance condition and may further process the business request. Otherwise, the business node that does not satisfy the acceptance condition would stop further processing the business request.

Before the business node starts to receive business requests and to perform business processing, and specifically after the configuration of the business attribute information of the business node is completed, the business attribute information may be sent to a consensus node for authenticity verification. The specific process may include sending an identifier of the business node and the business attribute information from the business node to the consensus node, such that the consensus node may verify the business attribute information. If the business attribute information is verified, the identifier of the business node and the business attribute information may be stored in the blockchain, that is, stored in blockchain database of each of the nodes in the blockchain, including both the business nodes and the consensus nodes.

The business node may generate a globally unique node identifier to distinguish the business node. The consensus node may identify the business node based on the node identifier. After the business node stores the node identifier and the business attribute information in the blockchain, all the nodes in the blockchain network may rapidly search the business attribute information of the business node based on the node identifier.

After the consensus node receives the business attribute information sent by the business node, the consensus node may verify the authenticity of the business attribute information. After the business attribute information is verified, the consensus node may send verification success information to the business node, such that the business node may store the verified business attribute information in the blockchain.

When the consensus node verifies the authenticity of the business attribute information, the consensus node may obtain the business attribute information of the business node through a verification interface provided by the business node, and may compare and verify the obtained business attribute information with the to-be-verified business attribute information. The consensus node may also verify the authenticity of the business attribute information through a zero-knowledge proof mechanism, or may verify the authenticity of the business attribute information through a third-party authentication certificate. In one embodiment, certain business node, such as a backbone network node and a free trade zone node, may be unable to certify business processing qualification by the business node itself, and may be certified by an certificate provided by a third-party authority management organization. The consensus node may store in advance verification mechanisms for various types of the business attribute information. The type of the verification mechanism used by the consensus node will not be limited by the embodiments of the present invention.

At step 203, if the business attribute information of the business node includes the content matching the acceptance condition, the business node processes the business request and generates business data.

When the business node satisfies the acceptance condition, the business node may process the business request and may generate the business data to store in the blockchain based on the business content in the business request. The business node may preset a corresponding business processing policy based on its own business processing right. When the business request is received, the business node may call the corresponding business processing policy based on the business type to which the business request belongs and process the business request accordingly.

Because there may be multiple business nodes satisfying the acceptance condition of the business request in the entire blockchain network, the business data generated by the business node may require a consensus verification process to finally confirm which business node possesses the ledger right. In one embodiment, the consensus node may perform a consensus verification process on a pre-processing block. The processing detail is described as follows.

At step 204, the business node sends a pre-processing block including the business data to a consensus node.

The business nodes generating the business data may send the pre-processing block to all the consensus nodes, such that all the consensus nodes may perform the consensus verification process on the pre-processing block. The pre-processing block may include the node identifier of the business node, such that the consensus node may determine the business node sending the pre-processing block based on node identifier and may distinguish the received pre-processing blocks.

At step 205, the consensus node receives the pre-processing block sent by the business node.

The pre-processing block may include the business request, such that the consensus node may determine whether the business node satisfies the acceptance condition o the business request, thereby preventing the business node from faking satisfying the acceptance condition and processing the business request. A process in which the consensus node determines whether the business node satisfies the acceptance condition of the business request may include: receiving the pre-processing block sent by the business node, where the pre-processing block includes the business data and the business request including the acceptance condition; obtaining the business attribute information of the business node; and when the business attribute information of the business node includes the content matching the acceptance condition, performing the consensus verification process on the pre-processing block.

When the consensus node obtains the business attribute information of the business node, the consensus node may obtain the business attribute information of the business node from the blockchain. In other words, the consensus node may read the business attribute information from its own blockchain database. Alternatively, if the business attribute information of the business node is not pre-stored in the blockchain, the consensus node may obtain the business attribute information of the business node through the verification interface provided by the business node.

The embodiments of the present invention do not limit specific method of determining the business attribute information of the business node.

After the consensus node determines based on the pre-processing block that the business node satisfies the acceptance condition of the business request, the consensus node may further perform the consensus verification process on the pre-processing block.

At step 206, the consensus node performs a consensus verification process on the pre-processing block.

The consensus node may receive pre-processing blocks sent by multiple business nodes. Then, the consensus node may perform the consensus verification process on the pre-processing block and may select the pre-processing block that can be finally stored in the blockchain. The pre-processing block that can be finally stored in the blockchain may be the pre-processing block that successfully passes the consensus verification process. Specifically, when the consensus node performs the consensus verification process on the pre-processing block, the consensus node may select a preset number of the competing pre-processing blocks from the received pre-processing blocks according to a preset selection rule. Then, the consensus node may send the selected competing pre-processing blocks to all other consensus nodes. The consensus node may determine the pre-processing block that can be finally stored in the blockchain from the competing pre-processing blocks through a consensus competition process. After the consensus node determines the pre-processing block that can be finally stored in the blockchain, the consensus node may compete for the ledger right to store the confirmed information corresponding to the pre-processing block that successfully passes the consensus verification process in the blockchain. The consensus node that wins the ledger right to store the confirmed information in the blockchain may store the confirmed information in the blockchain. Alternatively, the consensus node that has the ledger right to store the confirmed information corresponding to the pre-processing block that successfully passes the consensus verification process in the blockchain may be pre-determined. The confirmed information may include the node identifier and a business identifier in the pre-processing block that successfully passes the consensus verification process. It should be noted that the steps provided above for performing the consensus verification process are intended to be illustrative. The embodiments of the present invention do not limit the specific steps in the consensus verification process.

At step 207, if the pre-processing block successfully passes the consensus verification process, the business node stores the pre-processing block in the blockchain.

When the consensus node stores the confirmed information in the block chain, the consensus node may send the confirmed information to all the node in the blockchain, such that the confirmed information may be stored in the blockchain database of each node. When the business node receives the confirmed information sent by the consensus node and determines that the confirmed information is the confirmed information corresponding to the pre-processing block generated by the business node itself, that is, the confirmed information includes the node identifier of the business node and the business identifier of the current business request, the business node may determine that the pre-processing block generated by the business node itself passes the consensus verification process and that the business node has the ledger right. Then the business node may store the pre-processing block generated by the business node itself in the block chain.

In one embodiment, the business node may determine that the pre-processing block generated by the business node itself successfully passes the consensus verification process in the following manner. After the business node sends the pre-processing block to the consensus node, the business node may retrieve the blockchain at a preset interval to determine whether the blockchain contains the confirmed information corresponding to the pre-processing block. After the business node obtains the confirmed information corresponding to the pre-processing block, the business node may determine that the pre-processing block generated by the business node itself successfully passes the consensus verification process.

After the business stores the pre-processing block in the blockchain, the business node may notify other business nodes that the pre-processing block successfully passes the consensus verification process. Then, other business nodes may give up competing for the ledger right for the same business request.

The blockchain-based business processing method provided by the embodiments of the present invention may designate certain business nodes to process a business request through specifying an acceptance condition in the business request. Following requestor's expectation, the business to be processed in the blockchain may be processed by only the business nodes satisfying the acceptance condition. It may be avoided that the business node in the blockchain processes the business request without being constrained by the requestor or the business node unsatisfying the acceptance condition processes the business request. Only the business nodes satisfying the acceptance condition in the blockchain may be permitted to process the business request and to compete for the ledger right by sending the pre-processing block to the consensus node. Thus, the overall business processing load and data transmission load in the blockchain may be reduced.

Based on similar technical concept, the embodiments of the present invention also provide a blockchain-based business processing system. The system may include a business node and a consensus node.

The business node may be used to receive a business request sent by a client. The business request may include an acceptance condition. The business node may determine whether business attribute information of the business node includes a content matching the acceptance condition. If the business attribute information includes the content matching the acceptance condition, the business node may process the business request to generate business data and may send a pre-processing block of the business data to the consensus node. After the pre-processing block successfully passes a consensus verification process, the business node may store the pre-processing block in the blockchain. The consensus node may be used to perform the consensus verification process on the pre-processing block.

In one embodiment, the business node may send a node identifier of the business node and the business attribute information to the consensus node. After the consensus node receives the node identifier and the business attribute information, the consensus node may verify the authenticity of the business attribute information. If the business attribute information is verified, the consensus node may send verification success information to the business node. After the business node receives the verification success information, the business node may store the node identifier of the business node and the business attribute information in the blockchain.

In one embodiment, the consensus node may obtain the business attribute information of the business node through a verification interface provided by the business node and may compare and verify the obtained business attribute information with the to-be-verified business attribute information. The consensus node may also verify the authenticity of the business attribute information through a zero-knowledge proof mechanism or may verify the authenticity of the business attribute information through a third-party authentication certificate.

In one embodiment, after the consensus node receives the pre-processing block, the consensus node may obtain the business attribute information of the business node based on the pre-processing block. When the business attribute information of the business node includes the content matching the acceptance condition, the consensus node may perform the consensus verification process on the pre-processing block.

In one embodiment, if the pre-processing block successfully passes the consensus verification process, the consensus node may store corresponding confirmed information in the blockchain.

In one embodiment, if the business node obtains the confirmed information corresponding to the pre-processing block, the business node may store the pre-processing block in the blockchain.

In one embodiment, the business attribute information may include one or more of a geographical location of the business node, a network operator to which the business node belongs, a processing capability of the business node, and business processing qualification (e.g., a signature certificate) which the business node possesses.

In one embodiment, the consensus node may store in advance verification mechanisms for various types of the business attribute information.

The embodiments of the present invention may designate certain business nodes to process a business request through specifying an acceptance condition in the business request. Following requestor's expectation, the business to be processed in the blockchain may be processed by only the business nodes satisfying the acceptance condition. It may be avoided that the business node in the blockchain processes the business request without being constrained by the requestor or the business node unsatisfying the acceptance condition processes the business request. Only the business nodes satisfying the acceptance condition in the blockchain may be permitted to process the business request and to compete for the ledger right by sending the pre-processing block to the consensus node. Thus, the overall business processing load and data transmission load in the blockchain may be reduced.

It should be noted that the blockchain-based business processing method and the blockchain-based business processing system provided in the embodiments of the present invention share the same technical concept. The implementation details of the system may refer to the embodiments of the method and will not be repeated herein.

Through the description of the above embodiments, those skilled in the art may clearly understand that the embodiments may be implemented in software on a general-purpose hardware platform or implemented in hardware. Based on such understanding, the above described technical solution or the contribution beyond the existing technology may be embodied in the form of software product. The software product may be stored in a computer readable storage medium such as a ROM/RAM, a magnetic disk, or an optical disk, etc. The software product may include program instructions to be executed by a computer (e.g., a personal computer, a server, or a network device, etc.) to implement various method embodiments or portions of various method embodiments.

It should be understood by those skilled in the art that the foregoing are merely certain preferred embodiments of the present invention and are not intended to limit the present invention. Without departing from the spirit and principles of the present invention, any modifications, equivalent substitutions, and improvements, etc. shall fall within the scope of the present invention.

## Claims

1. A blockchain-based business processing method, comprising:
receiving, by a business node, a business request sent by a client, wherein the business request includes an acceptance condition;
determining whether business attribute information of the business node includes a content matching the acceptance condition;
if the business attribute information of the business node includes the content matching the acceptance condition, processing the business request, and generating business data;
sending a pre-processing block including the business data from the business node to a consensus node;
at the consensus node, performing a consensus verification process on the pre-processing block; and
if the pre-processing block successfully passes the consensus verification process, storing, by the business node, the pre-processing block in a blockchain.

2. The method of claim 1, wherein before the business node receives the business request sent by the client, the method further includes:
sending, by the business node, a node identifier and the business attribute information of the business node to the consensus node;
after the consensus node receives the node identifier and the business attribute information, verifying the business attribute information;
if the business attribute information is verified, sending, by the consensus node, verification success information to the business node; and
after the business node receives the verification success information, storing the node identifier and the business attribute information of the business node in the blockchain.

3. The method of claim 2, wherein verifying the authenticity of the business attribute information includes one of:
obtaining the business attribute information of the business node through a verification interface provided by the business node, and comparing and verifying the obtained business attribute information with the to-be-verified business attribute information; or
verifying the business attribute information through a zero-knowledge proof mechanism; or
verifying the business attribute information through a third-party authentication certificate.

4. The method of claim 1, wherein the pre-processing block also includes the business request and after the business node sends the pre-processing block to the consensus node, the method includes:
after the consensus node receives the pre-processing block, obtaining the business attribute information of the business node based on the pre-processing block; and
when the consensus node determines that the business attribute information of the business node includes the content matching the acceptance condition, performing the consensus verification process on the pre-processing block.

5. The method of claim 1, wherein after the consensus node performs the consensus verification process on the pre-processing block, the method includes:
if the pre-processing block successfully passes the consensus verification process, storing corresponding confirmed information in the blockchain by the consensus node.

6. The method of claim 5, wherein if the pre-processing block successfully passes the consensus verification process, storing the pre-processing block in the blockchain by the business node includes:
if the business node obtains the confirmed information corresponding to the pre-processing block, storing the pre-processing block in the blockchain.

7. The method of any of claims 1-6, wherein:
the business attribute information includes one or more of a geographical location of the business node, a network operator to which the business node belongs, a processing capability of the business node, and business processing qualification which the business node possesses.

8. The method of any of claims 1-6, further including:
storing, by the consensus node, verification mechanisms for various types of the business attribute information.

9. A blockchain-based business processing system, comprising:
a business node configured to receive a business request sent by a client and including an acceptance condition, determine whether business attribute information of the business node includes a content matching the acceptance condition, process the business request and generate business data if the business attribute information includes the content matching the acceptance condition, send a pre-processing block including the business data to a consensus node, and store the pre-processing block in a blockchain when the pre-processing block successfully passes a consensus verification process; and
the consensus node configured to perform the consensus verification process on the pre-processing block.

10. The system of claim 9, wherein:
the business node sends a node identifier of the business node and the business attribute information to the consensus node;
after the consensus node receives the node identifier and the business attribute information, the consensus node verifies authenticity of the business attribute information and sends verification success information to the business node if the business attribute information is verified; and
after the business node receives the verification success information, the business node stores the node identifier and the business attribute information of the business node in the blockchain.

11. The system of claim 10, wherein the consensus node verifies the authenticity of the business attribute information by one of:
obtaining the business attribute information of the business node through a verification interface provided by the business node and comparing and verifying the obtained business attribute information with the to-be-verified business attribute information;
verifying the authenticity of the business attribute information through a zero-knowledge proof mechanism; and
verifying the authenticity of the business attribute information through a third-party authentication certificate.

12. The system of claim 9, wherein:
after the consensus node receives the pre-processing block, the consensus node obtains the business attribute information of the business node based on the pre-processing block; and
when the consensus node determines that the business attribute information of the business node includes the content matching the acceptance condition, the consensus node performs the consensus verification process on the pre-processing block.

13. The system of claim 9, wherein:
if the pre-processing block successfully passes the consensus verification process, the consensus node stores corresponding confirmed information in the blockchain.

14. The system of claim 13, wherein:
if the business node obtains the confirmed information corresponding to the pre-processing block, the business node stores the pre-processing block in the blockchain.

15. The system of any of claims 9-14, wherein:
the business attribute information includes one or more of a geographical location of the business node, a network operator to which the business node belongs, a processing capability of the business node, and business processing qualification which the business node possesses.

16. The system of any of claims 9-14, wherein:
the business node stores in advance verification mechanisms for various types of the business attribute information.
